# EUROPÄISCHE PATENTSCHRIFT

(11) **EP 2 805 863 B1**
(45) Veröffentlichungstag und Bekanntmachung des Hinweises auf die Patenterteilung: **13.11.2019**
(21) Anmeldenummer: 14166655.2
(22) Anmeldetag: 30.04.2014
(51) Int. Cl.: B61C 9/38, F16D 7/08, F16D 43/206

(54) **Antriebsstrang eines Schienenfahrzeugwagens sowie Verfahren zur Erkennung eines Überlastfalls in einem Antriebsstrang**
Drive train of a rail vehicle and method for detecting an overload in a drive train
Chaîne cinématique d'un véhicule ferroviaire et procédé de détection d'un cas de surcharge d'une chaîne cinématique

(30) Priorität: 03.05.2013 DE 102013104558
(43) Veröffentlichungstag der Anmeldung: 26.11.2014
(73) Patentinhaber: Bombardier Transportation GmbH, 10785 Berlin (DE)
(72) Erfinder: Dakic, Vesna, 10787 Berlin (DE); Ziemann, Andreas, 14469 Potsdam (DE)
(74) Vertreter: Zimmermann & Partner Patentanwälte mbB

(56) Entgegenhaltungen:
- EP-A1- 0 001 409
- CH-A- 264 483
- DE-A1- 3 700 730
- DE-A1- 19 717 290
- DE-U1- 9 313 663

## Beschreibung

### Technisches Gebiet

Die Erfindung betrifft einen Antriebsstrang eines Schienenfahrzeugwagen mit einer Überlastkupplung und ein Verfahren zur Erkennung eines Überlastfalls in einem Antriebsstrang.

Ein solcher Antriebsstrang ist z.B. von der CH-264483-A1 bekannt.

### Vorbekannter Stand der Technik

Beim Betreiben von Schienenfahrzeugen können Antriebskomponenten Ausfälle verursachen, beispielsweise durch Abnutzung oder Beschädigung von Lagern an Achsgetrieben, welche das Blockieren einer Antriebsachse provozieren können.

Derartige Ausfälle können sogar zu einer Entgleisung mit dem Risiko großer Schäden an Mensch und Material führen. Zur Vermeidung und Früherkennung solcher Art von Ausfällen wird der Antriebsstrang, beispielsweise bei Hochgeschwindigkeitszügen, mit Sensoren ausgestattet. Hierzu werden beispielsweise Temperatursensoren am Achsgetriebe eingesetzt, die an das Überwachungssystem des Schienenfahrzeugs angeschlossen sind. Im Fall einer übermäßigen Lagererwärmung geben die Sensoren eine Meldung aus, die zu einem Abschalten des zugeordneten Antriebs oder, bei einer Blockierung, zu einem sofortigen Stopp des Schienenfahrzeugs führt, um einen Unfall zu vermeiden. Erfolgt lediglich eine Abschaltung des Antriebs, kann das Schienenfahrzeug noch bis zum nächsten planmäßigen Halt weiterfahren. Dies ist im Falle einer Blockierung nicht möglich.

Nachteilig bei Sensorsystemen ist im Allgemeinen jedoch die begrenzte Genauigkeit und Zuverlässigkeit. Dies kann bei der großen Anzahl von Sensorsystemen verbunden mit einer unvermeidlichen Fehlerrate zu einer deutlichen Einschränkung der Verfügbarkeit des Schienenfahrzeugs führen, da versehentliche Fehlermeldungen zu einer Wartung und damit zeitweiligen Stilllegung des Schienenfahrzeugs führen.

Zum Schutz vor sehr großen Reaktionsmomenten, die sich beispielsweise durch solche Blockierungen ergeben können, schlägt die DE 679 33 209 U1 eine Zahnkupplung als Verbindungsglied zwischen einem Elektromotor und dem Ritzel eines Achsgetriebes für ein Schienenfahrzeug vor. Die Zahnkupplung umfasst eine Kupplungshülse mit Innenverzahnung und eine in dieser mit einer Außenverzahnung koaxial und drehstarr steckenden Kupplungsnabe. Die Kupplungsnabe weist unterhalb des Zahngrundes aller Zähne eine axiale Ringnut und an der gegenüberliegenden Seite eine radiale Ringnut auf. Dadurch wird eine ringförmige Sollbruchstelle gebildet. Bei Auftreten von hohen Drehmomenten wird der Zahnring abgeschert und die Kupplungsnabe kann sich frei gegenüber der Kupplungshülse drehen.

Weiterhin sind beispielsweise aus der EP 0 051 097 A1 und GB 1 370 871 Drehmomentbegrenzer bekannt, die ein Auskuppeln bei Überschreiten eines maximalen Drehmoments ermöglichen, um Schäden zu vermeiden.

### Nachteile des Standes der Technik

Die vorstehend beschriebene Zahnkupplung ist Teil des Getriebes, sodass auch nach Überschreiten des Abschermoments Reaktionsmomente vom Radsatz in das Getriebe eingeleitet werden können. Blockierungen des Getriebes können sich daher weiterhin störend im Antriebsstrang auswirken und Achsen blockieren, wodurch der gesamte Antriebsstrang beschädigt werden kann. Blockierte Achsen stellen eine hohes Risiko dar und können zu Zugentgleisungen führen

### Problemstellung

Es ist daher Aufgabe der vorliegenden Erfindung, einen Antriebsstrang gegen große Reaktionsmomente zu schützen.

### Erfindungsgemäße Lösung

Diese Aufgabe wird gelöst durch einen Antriebsstrang nach Anspruch 1 und ein Verfahren nach Anspruch 12. Weitere Ausführungsformen, Modifikationen und Verbesserungen ergeben sich anhand der folgenden Beschreibung und der beigefügten Ansprüche.

Gemäß einer Ausführungsform wird ein Antriebsstrang eines Schienenfahrzeugwagens bereitgestellt. Der Antriebsstrang umfasst eine Radsatzwelle und ein Großrad zur Übertragung eines Drehmoments von einer Antriebseinheit auf die Radsatzwelle. Eine Überlastkupplung mit vorgegebenem Schaltmoment ist drehfest mit der Radsatzwelle verbunden und koppelt das Großrad drehfest mit der Radsatzwelle, wobei die Überlastkupplung bei Überschreiten des Schaltmoments das Großrad gegenüber der Radsatzwelle freigibt.

Durch den Einsatz einer bevorzugt automatischen Überlastkupplung, die am oder im Großrad des Treibradsatzes angeordnet ist, kann eine Blockierung des Antriebsstrangs bei einer Blockierung beispielsweise der Antriebseinheit zuverlässig vermieden werden. Typischerweise umfasst die Antriebseinheit eine Drehmomenterzeugungseinrichtung, z. B. einen elektrischen Fahrmotor, und eine Drehmomentübertragungseinrichtung, z. B. ein Getriebe. Die Überlastkupplung trennt den Antriebsstrang aus Antriebseinheit und Treibradsatz in einem abtriebsseitigen Bereich, d. h. zwischen Radsatzwelle und Getriebe. Tritt eine Blockierung im Antriebsstrang auf, beispielsweise im Getriebe, wird der Antriebsstrang durch die Überlastkupplung unterbrochen, welche die Radsatzwelle freigibt, sodass keine Reaktionsmomente von dem Treibradsatz in das Getriebe eingeleitet werden können. Der Treibradsatz wirkt nach Freigabe durch die Überlastkupplung als Laufradsatz ohne Drehmomentkopplung zum Schienenfahrzeugwagen.

Tritt dagegen eine Blockierung beispielsweise der Radsatzwelle auf, wird die Radsatzwelle von der Überlastkupplung freigegeben, sodass sich die Blockierung nicht auf das Getriebe und die Antriebseinheit auswirken. Das Getriebe kann sich daher frei gegenüber der Radsatzwelle drehen.

Diese Entkopplung bringt mehrere Vorteile mit sich. So wird einerseits verhindert, dass an den blockierten Einrichtungen weitere Schäden durch die vom Treibradsatz eingekoppelten Momente entstehen können. Brüche am Getriebegehäuse und Fahrmotor oder an deren Aufhängungen lassen sich so ausschließen. Weitere, als Folge der Blockierungen auftretende Schäden, können so sicher ausgeschlossen werden.

Außerdem kann das Schienenfahrzeug weiterhin mit einer geringfügigen Verringerung der Antriebsleistung betrieben werden, sofern insgesamt genug Traktionsleistung zur Verfügung steht, da nur ein Treibradsatz ausgefallen ist. Dadurch werden Zwangsunterbrechungen im Betriebsablauf vermieden und die Zuverlässigkeit des Gesamtsystems verbessert werden. Der defekte Schienenfahrzeugwagen kann beispielsweise bis Betriebsschluss weiter eingesetzt werden.

Im Gegensatz zu bisherigen Lösungen wird durch den erfindungsgemäßen Treibradsatz ausgeschlossen, dass ein blockierter Antrieb die Radsatzwelle blockiert oder beschädigt und den Zug somit in einen gefährlichen Betriebszustand bringt. Bei bisherigen Lösungen erfolgte zwar auch eine Trennung im Antriebsstrang, diese Trennung erfolgte erst jedoch im Getriebe, sodass weiterhin Drehmomente von der Radsatzwelle in das Getriebe eingeleitet werden konnten.

Außerdem ist die hier vorgestellte Lösung platzsparend, da die Überlastkupplung in das Großrad integriert ist oder direkt benachbart zum Großrad angeordnet ist.

Gemäß einer Ausführungsform umfasst das Großrad eine Nabe, die drehfest mit der Radsatzwelle verbunden ist, und einen Zahnkranz. Die Überlastkupplung verbindet die Nabe mit dem Zahnkranz drehfest und trennt bei Überschreiten des vorgegebenen Schaltmoments die Nabe vom Zahnkranz. Damit kann sich die Radsatzwelle zusammen mit der Nabe frei gegenüber dem Zahnkranz drehen.

Die Trennung des Antriebsstrangs erfolgt somit in einem sehr nahen Bereich zur Radsatzwelle. Das Getriebe ist damit vollständig von der Radsatzwelle getrennt.

Gemäß einer Ausführungsform ist der Zahnkranz mittels eines Drehlagers auf der Radsatzwelle gelagert. Dadurch kann sich der Zahnkranz gegenüber der Radsatzwelle frei drehen, nachdem die Überlastkupplung den Zahnkranz freigegeben hat.

Gemäß einer Ausführungsform umfasst die Überlastkupplung ein oder mehrere federvorgespannte Rastelemente, welches bzw. welche eine drehfeste Verbindung der Nabe mit dem Zahnkranz herstellt bzw. herstellen und das bzw. die bei Überschreiten des vorgegebenen Überlastmomentes ausrastet bzw. ausrasten und dann eine freie Rotation des Zahnkranzes gegenüber der Nabe ermöglicht bzw. ermöglichen.

Die Überlastkupplung stellt damit gemäß einer Ausführungsform eine formschlüssige Verbindung zwischen einem mit der Nabe drehfest verbundenen ersten Teil und einem drehfest mit dem Großrad oder dem Zahnkranz drehfest verbundenen zweiten Teil her. Das erste Teil der Überlastkupplung kann beispielsweise mittels Presspassung mit der Nabe verbunden sein. Der zweite Teil der Überlastkupplung ist drehfest mit dem Zahnkranz verbunden, beispielsweise verschraubt. Die formschlüssige Verbindung erfolgt mittels eines beispielsweise in Achsrichtung der Radsatzwelle federnd vorgespannten Rastelements das in entsprechende zahnkranzseitige Formelemente, beispielsweise Vertiefungen, eingreift.

Gemäß einer Ausführungsform ist die Überlastkupplung eine Reibkupplung. Die Überlastkupplung kann daher auch eine kraftschlüssige Verbindung zwischen einem mit der Nabe drehfest verbundenen ersten Teil und einem drehfest mit dem Großrad oder dem Zahnkranz drehfest verbundenen zweiten Teil herstellen.

Gemäß einer Ausführungsform ist das Schaltmoment der Überlastkupplung einstellbar. Dies kann beispielsweise durch die Federvorspannung erfolgen.

Gemäß einer Ausführungsform ist die Überlastkupplung konzentrisch zur Radsatzwelle. Diese Lösung ist besonders platzsparend.

Gemäß einer Ausführungsform ist die Überlastkupplung passiv. Die Überlastkupplung wird somit nicht durch eine ihrerseits störanfällige Elektronik überwacht und gesteuert, sondern unterbricht autonom den Antriebsstrang bei Überschreiten des Schaltmoments.

Gemäß einer Ausführungsform umfasst der Antriebsstrang mindestens einen Sensor zum Erfassen einer Blockierung der Antriebseinheit und eine Elektronik zum Melden der Blockierung an ein Fahrzeugsteuerungssystem und zum Abschalten der Antriebseinheit. Dadurch wird verhindert, dass beispielsweise der Fahrmotor weiterhin Momente in das beispielsweise blockierte Getriebe einleitet. Außerdem kann der Schadensfall registriert und dem Fahrer oder einer Überwachungseinheit mitgeteilt werden.

Gemäß einer Ausführungsform umfasst der Antriebsstrang weiterhin ein in Eingriff mit dem Großrad stehendes Ritzel zum Übertragen eines Drehmoments von einer Drehmomenterzeugungseinrichtung auf das Großrad.

Gemäß einer Ausführungsform wird ein Verfahren zur Erkennung eines Überlastfalles in einem Antriebsstrang eines Schienenfahrzeuges vorgeschlagen, wobei der Überlast- und Freigabefall an einem betroffenen Antriebsstrang mittels eines Sensors detektiert wird, welcher mit einer elektronischen Auswerteeinheit verbunden ist, die dem Fahrer und/oder der Fahrzeugüberwachung den Überlast- und Freigabefall signalisiert.

Gemäß einer Ausführungsform wird der betroffene Antriebsstrang nach Erfassen des Überlast- und Freigabefalls abgeschaltet.

Gemäß einer Ausführungsform wird ein Treibradsatz eines Schienenfahrzeugwagens umfassend eine Radsatzwelle und ein Großrad, welches mit der Radsatzwelle zur Übertragung eines Drehmoments von einer Antriebseinheit auf Radsatzwelle verbunden ist, vorgeschlagen. Das Großrad umfasst eine Nabe, die drehfest mit der Radsatzwelle verbunden ist, und einen Zahnkranz. Das Großrad umfasst eine Überlastkupplung mit vorgegebenem Schaltmoment, welche die Nabe mit dem Zahnkranz drehfest verbindet und bei Überschreiten des vorgegebenen Schaltmoments die Nabe vom Zahnkranz trennt, sodass sich die Radsatzwelle zusammen mit der Nabe frei gegenüber dem Zahnkranz drehen kann.

Das Schaltmoment der Überlastkupplung kann unter Berücksichtigung der typischerweise im Fahrbetrieb auftretenden Drehmomente geeignet vorgewählt werden. Die Überlastkupplung ist daher eingerichtet, die Radsatzwelle bei Überschreiten der Schaltschwelle freizugeben.

Im Gegensatz zu Drehmomentbegrenzern bleibt die Radsatzwelle auch nach einem nachfolgenden Unterschreiten des Schaltmoments frei. Damit unterscheidet sich die Überlastkupplung von anderen Lösungen, bei denen ein temporäres Blockieren unterbunden werden soll. Das Schaltmoment ist typischerweise so hoch gewählt, dass dessen Erreichen ein sicheres Zeichen für eine dauerhafte Blockierung darstellt. Die Überlastkupplung schaltet damit gemäß einer Ausführungsform nur einmal und gibt die Radsatzwelle dauerhaft frei. Dies ist auch von Vorteil, da während des Betriebs in der Regel nicht geklärt werden kann, ob nur eine vorrübergehende oder dauerhafte Blockierung vorliegt.

Gemäß einer Ausführungsform wird das Schaltmoment daher größer gewählt als die unter normalen Betriebsbedingungen einschließlich Bremsbetrieb am Zahnkranz oder der Radsatzwelle auftretenden Drehmomente, und kleiner gewählt als das Drehmoment an dem Zahnkranz oder der Radsatzwelle bei einem Blockieren der Antriebseinheit. Die am Zahnkranz oder am mit dem Zahnkranz kämmenden Ritzel des Getriebes im Normalbetrieb auftretenden Momente sind typischerweise deutlich kleiner als die Momente, die beim Blockieren der Antriebseinheit auftreten. Dabei muss berücksichtigt werden, dass der Treibradsatz aufgrund seiner hohen Masse ein sehr großes Trägheitsmoment aufweist, welches bei plötzlichem Blockieren des Antriebsstrangs zu einem sehr hohen Reaktionsmoment führt. Tritt beispielsweise eine Blockierung des Antriebsmotors bei hoher Geschwindigkeit auf, so dreht sich der Treibradsatz aufgrund seines großen Trägheitsmoments weiter. Das Schaltmoment wird so eingestellt, dass es kleiner als die dabei auftretenden Drehmomente ist.

Gemäß einer Ausführungsform wird ein Antriebsstrang eines Schienenfahrzeugwagens mit einer Antriebseinheit und einem Treibradsatz vorgeschlagen, wobei die Antriebseinheit mit dem Treibradsatz zur Übertragung eines Drehmoments verbunden ist. Im Antriebsstrang kann mindestens ein Sensor zum Erfassen einer Blockierung der Antriebseinheit integriert sein.

Die Blockierung der Antriebseinheit kann mittels des Sensors erfasst und dann die Antriebseinheit abgeschaltet werden. Dies ist jedoch unabhängig von dem Trennen des Antriebsstrangs durch die Überlastkupplung, welche das Einleiten von Reaktionsmomenten vom Treibradsatz in die Antriebseinheit unterbindet. Der Sensor kann beispielsweise ein Temperatursensor sein. Das Abschalten der Antriebseinheit kann automatisch oder nach Ausgabe eines entsprechenden Signals an den Zugführer auch manuell erfolgen.

Ein weiterer Vorteil der hier beschriebenen Lösung ist, dass auch bestehende Treibradsätze mit einer Überlastkupplung versehen werden können bzw. durch Treibradsätze mit Überlastkupplungen im Großrad ausgetauscht werden können, da die Integration der Überlastkupplung in das Großrad keinen oder nur einen geringen zusätzlichen Bauraum erfordert und mit dem bestehenden Aufbau des Antriebsstrangs kompatibel ist.

Der hier vorgeschlagene Treibradsatz ist in allen Schienenfahrzeugwagen und insbesondere im Hochgeschwindigkeitsverkehr einsetzbar.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
Figur 1 zeigt einen schematischen Querschnitt durch einen Antriebsstrang umfassend einen Treibradsatz gemäß einer Ausführungsform.
Figur 2 zeigt die Höhe des Schaltmoments in Relation zu den unter Betriebsbedingungen auftretenden Drehmomenten.
Figur 3 zeigt eine Überlastkupplung gemäß einer Ausführungsform.

### Ausführungsbeispiele

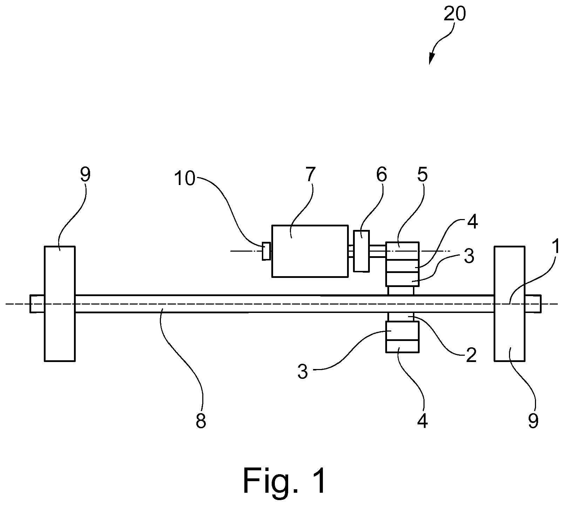

Figur 1 zeigt einen Treibradsatz 20 gemäß einer Ausführungsform. Der Treibradsatz 20 umfasst einen Radsatz 1, der eine Radsatzwelle 8 und Laufräder 9 aufweist. Auf der Radsatzwelle 8 ist konzentrisch um diese die Nabe 2 des Getriebegroßrads oder Großrads angeordnet. Das Großrad umfasst in der hier beschriebenen Ausführungsform die Nabe 2, eine Überlastkupplung 3 und einen Zahnkranz 4. Die Überlastkupplung 3 ist damit in das Großrad integriert. Der Zahnkranz 4 des Großrads steht in Eingriff mit einem Ritzel 5, welches über eine Ausgleichskupplung, z.B. in Form einer Bogenzahnkupplung 6 mit dem Fahrmotor 7 verbunden ist.

Der Treibradsatz 20 ist in Figur 1 nur schematisch dargestellt. Der Treibradsatz 20 kann aber auch mit einem Hohlwellenantrieb ausgestattet sein.

Das Großrad bildet zusammen mit dem Ritzel 5 einen Radsatzantrieb, der eine Drehmomentübertragungseinrichtung darstellt, zum Übertragen des vom Fahrmotor 7 erzeugten Drehmoments auf die Radsatzwelle 8, welche starr mit den Laufrädern 9 verbunden ist. Der Fahrmotor 7 bildet hier eine Drehmomenterzeugungseinrichtung. Fahrmotor 7 und Radsatzantrieb bilden zusammen eine Antriebseinheit.

In das Großrad des Radsatzantriebs ist die Überlastkupplung 3 integriert, welche in der vorliegenden Ausführungsform als konzentrische und passive Überlastkupplung ausgelegt ist und den Zahnkranz 4 mit der Nabe 2 verbindet. Im Falle der Blockierung der Antriebseinheit oder ungewöhnlich starker Momente am Zahnkranz 4 wird die Überlastkupplung aktiviert, die einen Freilauf des Zahnkranzes 4 gegenüber der Nabe 2 ermöglicht. Der Zahnkranz 4 ist im ausgerasteten Zustand somit über die Überlastkupplung 3 auf der Nabe 2 des Großrads frei drehbar gelagert. Der Radsatz 1 kann sich ungehindert weiterdrehen, obwohl der Zahnkranz 4 durch die blockierte Antriebseinheit feststeht. Der Zahnkranz 4 ist im ausgerasteten Zustand somit über die Überlastkupplung auf der Nabe 2 des Großrads frei drehbar gelagert.

Die Überlastkupplung 3 kann auch als Reibkupplung ausgebildet sein.

Bevorzugt sind jedoch reibfreie Überlastkupplungen um das Entstehen von Reibwärme im Störfall zu vermeiden. Außerdem gestatten reibfreie Überlastkupplungen eine praktisch vollständige Drehmomententkopplung, sodass keine Drehmomente vom Radsatz in die Antriebseinheit eingeleitet werden können.

Das Ausrastmoment der Überlastkupplung 3, d. h. das Schaltmoment, kann gemäß einer Ausführungsform derart dimensioniert werden, dass eine kurzzeitige Blockierung des Radsatzes - wie sie zum Beispiel beim Überbremsen auch im normalen Betrieb auftreten kann - nicht zum Ausrasten bzw. Schalten der Überlastkupplung führt. Dies ist aufgrund der Asymmetrie der rotierenden Massen (Antriebseinheit vs. Radsatz) durch eine technische Auslegung möglich und wird nachfolgend beschrieben:
Fall A) Blockiert die Achse der Antriebseinheit kurzzeitig, so muss der Antriebsstrang in Eingriff bleiben. Das Ausrastmoment bzw. Schaltmoment der Überlastkupplung 3 muss so hoch bemessen sein, dass die Massenkräfte (Drehmoment) von Motor und Getriebe - die ja in der Drehung beharren - nicht zum Unterbrechen des Antriebsstranges führen können. Die bei der "normalen" Achsblockierung entstehenden Momente können weder Getriebe noch Fahrmotor beschädigen. Im normalen Fahrbetrieb einschließlich Bremsbetrieb bleibt damit die Überlastkupplung 3 in Eingriff. Dies kann beispielsweise durch eine gewisse Schaltträgheit der Überlastkupplung erreicht werden.
Fall B) Blockieren Fahrmotor und/oder Getriebe, so erzeugt die hohe kinetische Energie des weiter rotierenden Radsatzes ein sehr viel größeres Moment als das eingestellte Schaltmoment der Überlastkupplung, welche in Reaktion darauf das Getriebe und Radsatzwelle automatisch und sicher voneinander trennt. Eine elektronische Überwachung ist hierzu nicht erforderlich. Bei Überschreiten des vorgegebenen Schaltmoments rastet die Überlastkupplung 3 aus und trennt die Radsatzwelle 8 vom Zahnrad 4 des Großrads, um eine Rotation der Radsatzwelle 8 entsprechend einer nicht angetriebenen Achse zu ermöglichen.

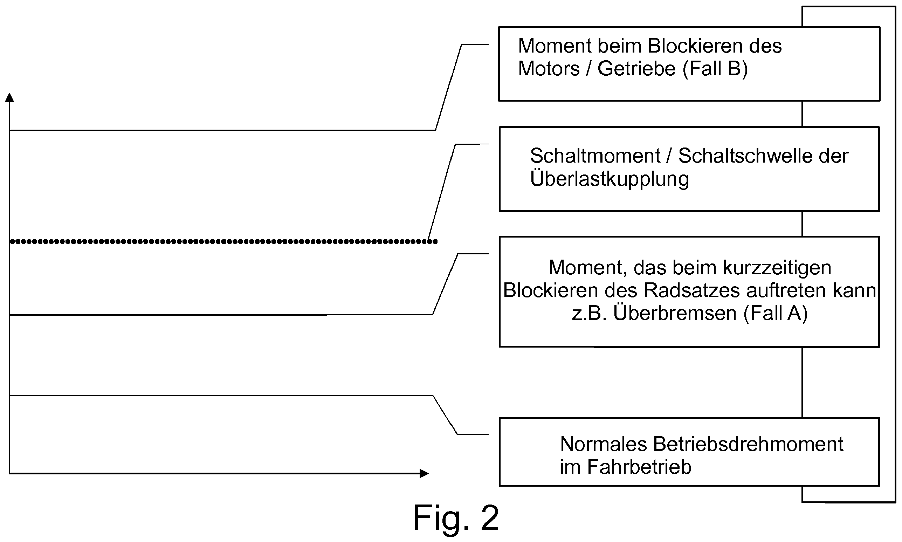

Die Figur 2 stellt zur Veranschaulichung des Schaltmoments qualitativ die Höhe der typischen Drehmomente dar. Für alle normalen Betriebszustände bleibt das Drehmoment deutlich unter der Schaltschwelle. Nur im Störungsfall (B) wird die Überlastkupplung 3 ausgelöst. Das Schaltmoment wird somit größer gewählt als die Drehmomente am Ritzel 5 oder Zahnkranz 4 während des normalen Fahrbetriebs, einschließlich Bremsbetrieb, und wird kleiner gewählt als das Drehmoment an der Radsatzwelle 8 bei einem dauerhaften Blockieren des Antriebsstrangs.

Die Überlastkupplung ist im Betrieb keinem wesentlichen Verschleiß unterworfen, da sie eine drehstarre Verbindung ohne Reibung oder Schlupf zwischen Getriebe und Radsatzwelle herstellt. Auch ein in die Überlastkupplung integriertes Wälzlager wird im Normalbetrieb nicht beansprucht, da keine Relativbewegung zwischen Überlastkupplung und konzentrischer Welle vorliegt. Das Wälzlager muss auch nicht wie andere Lager haltbar dimensioniert werden, sondern muss lediglich im Störfall die sichere Drehbewegung der Radsatzwelle bis zur Reparatur (z. B. am Ende des Einsatztages) ermöglichen. Nach Ausbau der zu reparierenden Radsatzwelle nebst Getriebe wird auch die Überlastkupplung instand gesetzt.

Gemäß einer Weiterbildung kann die Blockierung des Zahnkranzes 4 von einer vorhandenen Elektronik detektiert werden. Dazu kann ein Sensor 10 im Antriebsstrang integriert sein, beispielsweise ein Temperatursensor, der die Temperatur der Drehlager überwacht. Bei Detektion einer Blockierung, die sich beispielsweise durch eine stark erhöhte Temperatur des überwachten Drehlagers bemerkbar macht, kann der Fahrmotor abgeschaltet werden und das Schienenfahrzeug seine Fahrt ohne Gefahr und Beschädigung weiterer Komponenten beenden.

Wie weiter oben beschrieben, ist die alleinige Abschaltung des Fahrmotors 7 jedoch nicht ausreichend, um betriebsgefährliche Blockierungen im Antriebsweg zu entschärfen. Bei einer alleinigen Abschaltung des Fahrmotors 7, beispielsweise bei einer Blockierung der Antriebswelle im Fahrmotor, würde ohne die Überlastkupplung 3 immer noch eine drehstarre Verbindung zur Radsatzwelle 8 bestehen und die Drehung der Radsatzwelle 8 auf den blockierten Fahrmotor 7 übertragen werden. Erst durch Einsatz der hier beschriebenen Überlastkupplung 3 wird diese drehstarre Verbindung unterbrochen.

Die optionale zusätzliche elektronische Überwachung kann mehrere, beispielsweise vier, Temperatursensoren pro Getriebe oder Antriebsstrang umfassen. Beispielsweise können zwei Temperatursensoren auf jeder Seite des Getriebes, beispielsweise im Bereich der Drehlager des Ritzels 5, und im Bereich der Drehlager der Radsatzwelle 8 vorgesehen werden. Diese Temperatursensoren gestatten, blockierte Drehlager zu detektieren, da blockierte Drehlager zu einer starken Erwärmung führen.

Die von den Temperatursensoren erfassten Werte werden einer Auswerteeinheit zugeführt, welche mit einem Diagnosesystem verbunden sind, beispielsweise über einen geeigneten Datenbus. Die Übertragung der erfassten Temperaturwerte, oder dazu korrespondierender Werte, kann automatisch erfolgen, oder diese Werte können regelmäßig abgefragt werden. Bei dem Diagnosesystem kann es sich um einen Teil des Fahrzeugsteuerungssystem (TCMS) des Schienenfahrzeugs handeln.

Werden kritische Temperaturwerte erfasst und registriert, führt dies dazu, dass der Fahrzeugführer beispielsweise über das Fahrzeugsteuerungssystem über den kritischen Zustand oder den Ausfall des Antriebsstrangs informiert wird. Dies kann beispielsweise durch eine Mitteilung auf dem Kontrollschirm erfolgen. Weiterhin kann automatisch, oder durch den Fahrzeugführer, der Antriebsstrang deaktiviert werden, beispielsweise dadurch, dass der zugehörige Traktionsumrichter und /oder der Fahrmotor abgeschaltet wird bzw. werden.

Mittels der oben beschriebenen Sensoren, führt eine Blockierung des Antriebsstrangs bei der Verwendung der Überlastkupplung 3 nicht zwangsweise automatisch zu einem Betriebsstopp aufgrund eines Sicherheitsrisikos, welches durch die Überlastkupplung 3 entschärft ist. Lediglich der Fahrer wird über den Ausfall des Treibradsatzes informiert, sodass er die Fahrt zunächst weiterführen kann. Dies erhöht die Verfügbarkeit des Schienenfahrzeugs.

Die hier vorgeschlagene Maßnahme stellt eine einfache und direkte Lösung des Problems einer durch den Antriebsstrang blockierten Radsatzwelle dar. Positiv ist, dass Sicherheitsrisiken, welche mit der Blockierung von Fahrgetriebe und Fahrmotor verbunden sind, vermieden werden und insgesamt eine signifikante Verbesserung der Zuverlässigkeit und Verfügbarkeit von Schienenfahrzeugen erreicht wird. Weiterhin wird der Wartungsaufwand, der üblicherweise für den Tausch und Überprüfung von Temperatursensoren erforderlich ist, vermieden, da die Überlastkupplung unabhängig von elektrischen Systemen arbeiten kann. Außerdem ergibt sich eine deutliche Reduktion der Betriebskosten durch die Vermeidung von Stillstandszeiten, Fahrplanverzögerungen, und Vermeidung schwerwiegender Reparaturen vor Ort.

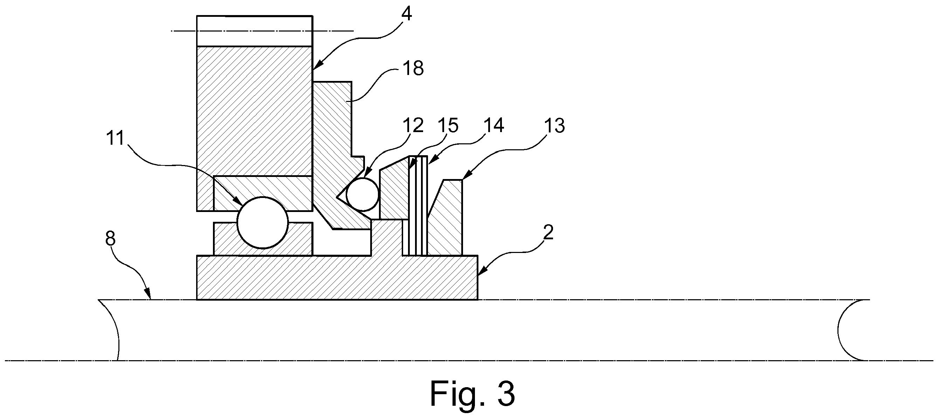

Figur 3 zeigt beispielhaft eine Ausführungsform eine Überlastkupplung, die hier wie bei einem achsreitenden Getriebe ausgeführt ist.

Auf der Radsatzwelle 8 ist die Nabe 2 durch eine Presspassung befestigt. Zwischen Zahnkranz 4 und Nabe 2 wird eine drehstarre Verbindung durch ein oder mehrere Rastelements 12 realisiert, die mittels einer durch eine Wellenmutter 13 vorgespannten Feder 14 über ein Druckstück 15 angepresst werden. Das Druckstück 15 stellt hier einen ersten Teil der Überlastkupplung dar, der drehstarr mit der Nabe 2 verbunden ist. Ein zweiter Teil der Überlastkupplung wird von einem mit den Zahnkranz 4 drehstarr verbundenem Ringelement 18 gebildet, das Ausnehmungen zur Aufnahme der Rastelemente 12 aufweist.

Bei Überschreitung eines mittels der Wellenmutter 13 einstellbaren Begrenzungsmomentes rasten die Rastelemente 12 axial aus und geben die Drehbewegung des Zahnkranzes 4 relativ zur Radsatzwelle 8 frei. Antrieb und Radsatzwelle sind nunmehr getrennt und der Zahnkranz 4 kann auf einem Drehlager 11, beispielsweise in Form eines Wälzlagers, frei rotieren.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

### Bezugszeichenliste

- 1: Radsatz
- 2: Nabe
- 3: Überlastkupplung
- 4: Zahnkranz
- 5: Ritzel
- 6: Bogenzahnkupplung
- 7: Fahrmotor
- 8: Radsatzwelle
- 9: Laufrad
- 10: Sensor
- 12: Rastelement
- 13: Wellenmutter
- 14: Feder
- 15: Druckstück
- 18: Ringelement
- 20: Treibradsatz

## Patentansprüche

1. Antriebsstrang eines Schienenfahrzeugwagens, wobei der Antriebsstrang eine Antriebseinheit (5, 6, 7) und einen Treibradsatz mit einer Radsatzwelle (8) und einem Großrad (2, 3, 4) zur Übertragung eines Drehmoments von der Antriebseinheit (5, 6, 7) auf die Radsatzwelle (1) aufweist,
**dadurch gekennzeichnet, dass** eine Überlastkupplung (3) mit vorgegebenem Schaltmoment (3) drehfest mit der Radsatzwelle (8) verbunden ist und das Großrad (2, 3, 4) drehfest mit der Radsatzwelle (1) koppelt, wobei die Überlastkupplung (3) bei Überschreiten des Schaltmoments das Großrad gegenüber der Radsatzwelle (8) freigibt.

2. Antriebsstrang nach Anspruch 1, **dadurch gekennzeichnet, dass** das Großrad (2, 3, 4) eine Nabe (2), die drehfest mit der Radsatzwelle (8) verbunden ist, und einen Zahnkranz (4) umfasst, wobei die Überlastkupplung (3) die Nabe (2) mit dem Zahnkranz (4) drehfest verbindet und bei Überschreiten des vorgegebenen Schaltmoments die Nabe (2) vom Zahnkranz (4) trennt, sodass sich die Radsatzwelle (8) zusammen mit der Nabe (2) frei gegenüber dem Zahnkranz (4) drehen kann.

3. Antriebsstrang nach Anspruch 2, **dadurch gekennzeichnet, dass** der Zahnkranz (4) auf der Radsatzwelle (8) mittels eines Drehlagers (11) gelagert ist.

4. Antriebsstrang nach einem der Ansprüche 2 bis 3, **dadurch gekennzeichnet, dass** die Überlastkupplung (3) mindestens ein federvorgespanntes Rastelement (12) umfasst, welches eine drehfeste Verbindung der Nabe (2) mit dem Zahnkranz (4) herstellt und das bei Überschreiten des vorgegebenen Überlastmomentes ausrastet und dann eine freie Rotation des Zahnkranzes (4) gegenüber der Nabe (2) ermöglicht.

5. Antriebsstrang nach Anspruch 1 oder 2, **dadurch gekennzeichnet, dass** die Überlastkupplung (3) eine Reibkupplung ist.

6. Antriebsstrang nach einem der vorherigen Ansprüche, **dadurch gekennzeichnet, dass** das Schaltmoment der Überlastkupplung (3) einstellbar ist.

7. Antriebsstrang nach einem der vorherigen Ansprüche, **dadurch gekennzeichnet, dass** die Überlastkupplung (3) konzentrisch zur Radsatzwelle (8) ist.

8. Antriebsstrang nach einem der vorherigen Ansprüche, **dadurch gekennzeichnet, dass** die Überlastkupplung (3) passiv ist.

9. Antriebsstrang nach einem der vorherigen Ansprüche, **dadurch gekennzeichnet, dass** das Schaltmoment größer gewählt ist als die unter normalen Betriebsbedingungen einschließlich Bremsbetrieb am Zahnkranz (4) auftretenden Drehmomente, und dass das Schaltmoment kleiner gewählt ist als das Drehmoment am Zahnkranz (4) bei einem Blockieren der Antriebseinheit (5, 6, 7).

10. Antriebstrang nach einem der vorherigen Ansprüche, weiterhin umfassend mindestens einen Sensor zum Erfassen einer Blockierung der Antriebseinheit (5, 6, 7) und eine Elektronik zum Melden der Blockierung an ein Fahrzeugsteuerungssystem und zum Abschalten der Antriebseinheit (5, 6, 7).

11. Antriebsstrang nach einem der vorherigen Ansprüche, weiterhin umfassend ein in Eingriff mit dem Großrad stehendes Ritzel (5) zum Übertragen eines Drehmoments von einer Drehmomenterzeugungseinrichtung (7) auf das Großrad.

12. Verfahren zur Erkennung eines Überlastfalles in einem Antriebsstrang eines Schienenfahrzeuges gemäß einem der Ansprüche 1 bis 11, **dadurch gekennzeichnet, dass** der Überlast- und Freigabefall an einem betroffenen Antriebsstrang mittels eines Sensors detektiert wird, welcher mit einer elektronischen Auswerteeinheit verbunden ist, die dem Fahrer und/oder der Fahrzeugüberwachung den Überlast- und Freigabefall signalisiert.

13. Verfahren nach Anspruch 12, **dadurch gekennzeichnet, dass** der betroffene Antriebsstrang nach Erfassen des Überlast- und Freigabefalls abgeschaltet wird.

14. Verfahren nach Anspruch 12, **dadurch gekennzeichnet, dass** der dem Antriebsstrang zugeordnete Traktionsumrichter abgeschaltet wird.

## Claims

1. A drive train of a rail vehicle, wherein the drive train has a drive unit (5, 6, 7) and has a drive wheel set having a wheel set axle (8) and a bull gear (2, 3, 4) for transmitting a torque from the drive unit (5, 6, 7) to the wheel set axle (1),
**characterized in that** an overload clutch (3) with a defined actuating torque (3) is connected to the wheel set axle (8) in a rotation-resistant manner, and that the bull gear (2, 3, 4) is coupled to the wheel set axle (1) in a rotation-resistant manner, wherein the overload clutch (3) releases the bull gear relative to the wheel set axle (8) when the actuating torque is exceeded.

2. The drive train according to Claim 1, **characterized in that** the bull gear (2, 3, 4) comprises a hub (2), which is connected to the wheel set axle (8) in a rotation-resistant manner, and a pinion (4), wherein the overload clutch (3) connects the hub (2) with the pinion (4) in a rotation-resistant manner and separates the hub (2) from the pinion (4) when the defined actuating torque is exceeded, such that the wheel set axle (8) and the hub (2) together are able to freely rotate relative to the pinion (4).

3. The drive train according to Claim 2, **characterized in that** the pinion (4) is supported on the wheel set axle (8) by means of a rotary bearing (11).

4. The drive train according to any one of Claims 2 to 3, **characterized in that** the overload clutch (3) comprises at least one spring-loaded latching element (12), which establishes a rotation-resistant connection between the hub (2) and the pinion (4) and which is released when the defined overload torque is exceeded, thereby enabling a free rotation of the pinion (4) relative to the hub (2).

5. The drive train according to Claim 1 or 2, **characterized in that** the overload clutch (3) is a friction clutch.

6. The drive train according to any one of the preceding claims, **characterized in that** the actuating torque of the overload clutch (3) is adjustable.

7. The drive train according to any one of the preceding claims, **characterized in that** the overload clutch (3) is concentric to the wheel set axle (8).

8. The drive train according to any one of the preceding claims, **characterized in that** the overload clutch (3) is passive.

9. The drive train according to any one of the preceding claims, **characterized in that** the actuating torque is selected to be greater than the torque values occurring at the pinion (4) under normal operating conditions including braking operations, and that the actuating torque is selected to be smaller than the torque at the pinion (4) when the drive unit is blocked (5, 6, 7).

10. The drive train according to any one of the preceding claims, furthermore comprising at least one sensor for detecting a blocked drive unit (5, 6, 7) and an electronic circuit for reporting a blockage to a vehicle control system and for switching off the drive unit (5, 6, 7).

11. The drive train according to any one of the preceding claims, furthermore comprising a sprocket (5) engaged with the bull gear for transferring a torque from a torque generating device (7) to the bull gear.

12. A method for detecting an overload in a drive train of a rail vehicle according to any one of Claims 1 to 11, **characterized in that** the overload and release occurrence in an affected drive train is detected by means of a sensor, which is connected to an electronic evaluating unit, which signals the overload and release occurrence to the driver and/or the vehicle monitoring system.

13. The method according to Claim 12, **characterized in that** the affected drive train is switched off after an overload and release occurrence has been detected.

14. The method according to Claim 12, **characterized in that** the traction inverter associated with the drive train is switched off.

## Revendications

1. Chaîne cinématique d'entraînement d'une voiture de véhicule ferroviaire, dans laquelle la chaîne cinématique d'entraînement présente une unité d'entraînement (5, 6, 7) et un essieu moteur avec un arbre d'essieu (8) et une grande roue d'engrenage (2, 3, 4) destinée à transmettre un couple de l'unité d'entraînement (5, 6, 7) à l'essieu moteur (1),
**caractérisée en ce qu'**un embrayage à limiteur de couple (3) à couple de commutation (3) prédéfini est relié de manière solidaire en rotation à l'arbre d'essieu (8) et accouple la grande roue (2, 3, 4) de manière solidaire en rotation à l'arbre d'essieu (8), dans laquelle l'embrayage à limiteur de couple (3) libère la grande roue par rapport à l'arbre d'essieu (8) lorsque le couple de manœuvre est dépassé.

2. Chaîne cinématique selon la revendication 1, **caractérisée en ce que** la grande roue (2, 3, 4) comprend un moyeu (2), qui est relié de manière solidaire en rotation à l'arbre d'essieu (8), et une couronne dentée (4), dans laquelle l'embrayage à limiteur de couple (3) relie le moyeu (2) à la couronne dentée (4) de manière solidaire en rotation et, lorsque le couple de manœuvre prédéfini est dépassé, sépare le moyeu (2) de la couronne dentée (4), de sorte que l'arbre d'essieu (8) peut tourner librement par rapport à la couronne dentée (4) conjointement avec le moyeu (2).

3. Chaîne cinématique selon la revendication 2, **caractérisée en ce que** la couronne dentée (4) est montée sur l'arbre d'essieu (8) au moyen d'un palier rotatif (11).

4. Chaîne cinématique selon l'une quelconque des revendications 2 à 3, **caractérisée en ce que** l'embrayage à limiteur de couple (3) comprend au moins un élément d'encliquetage (12) précontraint par un ressort, lequel élément établit une liaison solidaire en rotation du moyeu (2) avec la couronne dentée (4) et qui se dégage lorsque le couple de manœuvre prédéfini est dépassé et permet ainsi une rotation libre de la couronne dentée (4) par rapport au moyeu (2).

5. Chaîne cinématique selon la revendication 1 ou 2, **caractérisée en ce que** l'embrayage à limiteur de couple (3) est un embrayage à friction.

6. Chaîne cinématique selon l'une quelconque des revendications précédentes, **caractérisée en ce que** le couple de manœuvre de l'embrayage à limiteur de couple (3) est réglable.

7. Chaîne cinématique selon l'une quelconque des revendications précédentes, **caractérisée en ce que** l'embrayage à limiteur de couple (3) est concentrique par rapport à l'arbre d'essieu (8).

8. Chaîne cinématique selon l'une quelconque des revendications précédentes, **caractérisée en ce que** l'embrayage à limiteur de couple (3) est passif.

9. Chaîne cinématique selon l'une quelconque des revendications précédentes, **caractérisée en ce que** le couple de manœuvre est sélectionné pour être plus grand que les couples apparaissant sur la couronne dentée (4) dans des conditions de fonctionnement normales, y compris un freinage, et **en ce que** le couple de manœuvre est sélectionné pour être plus petit que le couple sur la couronne dentée (4) lors d'un blocage de l'unité d'entraînement (5, 6, 7).

10. Chaîne cinématique selon l'une quelconque des revendications précédentes, comprenant en outre au moins un capteur destiné à détecter un blocage de l'unité d'entraînement (5, 6, 7) et une électronique destinée à signaler le blocage à un système de commande de véhicule et à mettre hors service l'unité d'entraînement (5, 6, 7).

11. Chaîne cinématique selon l'une quelconque des revendications précédentes, comprenant en outre un pignon (5) engrené avec la grande roue pour la transmission d'un couple d'un dispositif de génération de couple (7) sur la grande roue.

12. Procédé de repérage d'un cas de surcharge dans une chaîne cinématique d'entraînement d'un véhicule ferroviaire selon l'une quelconque des revendications 1 à 11, **caractérisé en ce que** le cas de surcharge et de libération sur une chaîne cinématique d'entraînement concernée est détecté au moyen d'un capteur, lequel est relié à une unité d'évaluation électronique, qui signale au conducteur et/ou à la surveillance des véhicules le cas de surcharge et de libération.

13. Procédé selon la revendication 12, **caractérisé en ce que** la chaîne cinématique d'entraînement concernée est mise hors service après détection du cas de surcharge et de libération.

14. Procédé selon la revendication 12, **caractérisé en ce que** le convertisseur de traction associé à la chaîne cinématique d'entraînement est mis hors service.
